# FASCICULE DE BREVET EUROPEEN

(11) **EP 3 006 333 B1**
(45) Date de publication et mention de la délivrance du brevet: **22.03.2017**
(21) Numéro de dépôt: 15188413.7
(22) Date de dépôt: 05.10.2015
(51) Int. Cl.: B64C 25/50

(54) **ATTERRISSEUR D'AÉRONEF**
FAHRWERK EINES LUFTFAHRZEUGS
AIRCRAFT LANDING GEAR

(30) Priorité: 10.10.2014 FR 1459729
(43) Date de publication de la demande: 13.04.2016
(73) Titulaire: Safran Landing Systems, 78140 Vélizy-Villacoublay (FR)
(72) Inventeur: LIEGOIS, Pierre-Yves, 78140 Velizy-Villacoublay (FR); BLANPAIN, Thierry, 78140 Velizy-Villacoublay (FR); CAMPBELL, Edouard, 78140 Velizy-Villacoublay (FR)
(74) Mandataire: Lavialle, Bruno François Stéphane

(56) Documents cités:
- EP-A2- 2 107 004
- GB-A- 2 459 714
- GB-A- 2 482 154
- US-A- 2 589 341
- US-A1- 2005 200 328

## Description

L'invention concerne le domaine des atterrisseurs d'aéronef orientables équipés de systèmes d'« anti-shimmy ».

### ARRIERE PLAN DE L'INVENTION

On connaît des atterrisseurs d'aéronefs comportant une partie inférieure orientable et un dispositif d'orientation adapté à faire tourner la partie inférieure orientable en réponse à un ordre d'orientation. Classiquement, un tel atterrisseur comporte un caisson, une tige orientable coulissant dans le caisson et portant les roues, un tube d'orientation monté tournant et un compas liant en rotation le tube d'orientation et la tige orientable. Le dispositif d'orientation agit sur le tube d'orientation pour faire tourner la tige orientable et donc les roues via le compas.

Il existe de nombreux types de dispositifs d'orientation : certains comportent un ou deux vérins hydrauliques, d'autres un actionneur à crémaillère, d'autres encore un actionneur électromécanique, etc.

Ainsi, dans le domaine des aéronefs navals embarqués, il est connu d'utiliser un dispositif d'orientation comportant un actionneur à moteur hydraulique coopérant avec une roue dentée solidaire de la partie inférieure orientable de l'atterrisseur.

Dans le domaine des aéronefs légers, il est connu d'utiliser un dispositif d'orientation comportant un actionneur à moteur électrique coopérant avec une roue dentée solidaire de la partie inférieure orientable de l'atterrisseur.

Dans le cadre du développement d'un aéronef plus électrique, de nombreuses études visent à améliorer les dispositifs d'orientation existants munis d'un actionneur électromécanique.

Un tel dispositif d'orientation connu par le document GB 2 459 714 A présente les caractéristiques du préambule de la revendication 1. Il est équipé de moyens d'amortissement destinés à limiter la transmission de vibrations depuis la roue vers le reste de l'atterrisseur lorsque l'aéronef est au sol. Ces vibrations résultent notamment du « shimmy », qui désigne généralement un phénomène d'oscillations en torsion d'axe vertical susceptible de prendre naissance sur un atterrisseur lorsque l'aéronef roule au sol à vitesse suffisamment élevée. Ces vibrations résultent aussi de la libération d'énergie au moment de la crevaison d'un pneumatique d'une roue de l'atterrisseur lors d'un atterrissage.

Pour limiter les efforts appliqués sur l'actionneur et le train d'atterrissage, il a été envisagé d'introduire dans la chaîne cinématique de l'actionneur électromécanique un limiteur de couple dont le rôle est de protéger l'actionneur électromécanique ainsi que les pièces de structure de l'atterrisseur, et d'absorber et de dissiper l'énergie libérée au moment de la crevaison du pneumatique.

Comme le limiteur de couple est directement intégré dans la chaîne cinématique, son utilisation rend impossible la désolidarisation de l'arbre de sortie du moteur et du tube d'orientation, car un tel débrayage conduirait à la désactivation des moyens d'amortissement. Ainsi, pour tracter l'aéronef sur la piste, on utilise la réversibilité de la chaîne cinématique de l'actionneur électromécanique, ce qui implique une contrainte forte sur sa conception. Cette solution ne comporte pas de moyens d'amortissement pour les oscillations dues au shimmy et générant des efforts plus faibles que le seuil de déclenchement du limiteur de couple.

### OBJET DE L'INVENTION

L'invention a pour objet un atterrisseur d'aéronef ne présentant pas l'inconvénient précité.

### RESUME DE L'INVENTION

En vue de la réalisation de ce but, on propose un atterrisseur d'aéronef comportant un caisson articulé à la structure de l'aéronef, une tige coulissant selon un axe de coulissement X dans le caisson et dont une extrémité libre porte au moins une roue, un tube d'orientation monté tournant autour de l'axe X, et un compas de liaison en rotation du tube d'orientation et de la tige, l'atterrisseur étant de plus équipé d'un dispositif d'orientation de la roue autour de l'axe X, le dispositif d'orientation comprenant un corps dans lequel est intégré un actionneur électromécanique équipé d'un moteur électrique destiné à entraîner en rotation le tube d'orientation et donc la tige pour orienter la roue, l'atterrisseur étant muni en outre de moyens d'amortissement destinés à limiter la transmission de vibrations depuis la roue vers le reste de l'atterrisseur lorsque l'aéronef est au sol. Selon l'invention, le corps du dispositif d'orientation est monté tournant selon l'axe X avec une amplitude de rotation limitée, et les moyens d'amortissement s'étendent entre le corps du dispositif d'orientation et le caisson pour amortir les vibrations entre le corps du dispositif d'orientation et le caisson.

Les vibrations générées au niveau de la roue sont transmises à la structure de l'atterrisseur puis à la structure de l'aéronef via la tige, le compas de liaison, le tube tournant, le corps du dispositif d'orientation et le caisson. En autorisant une rotation limitée du corps du dispositif d'orientation autour de l'axe de la tige, et en montant les moyens d'amortissement sur le corps du dispositif d'orientation, on parvient à amortir les vibrations entre le corps du dispositif d'orientation et le caisson. Cet amortissement est donc réalisé à l'extérieur du corps du dispositif d'orientation indépendamment de la chaîne cinématique de l'actionneur électromécanique du dispositif d'orientation. Ainsi, une désolidarisation mécanique d'un arbre de sortie du moteur électrique de l'actionneur électromécanique et du tube d'orientation ne conduit pas à la désactivation des moyens d'amortissement.

### BREVE DESCRIPTION DES DESSINS

L'invention sera mieux comprise à la lumière de la description qui suit en référence aux figures des dessins annexés parmi lesquelles :
- la figure 1 est une vue schématique en coupe et de côté d'un atterrisseur de l'invention équipé d'un dispositif d'orientation d'une roue de l'atterrisseur ;
- la figure 2 représente une vue en coupe et de dessus du corps du dispositif d'orientation de l'atterrisseur de l'invention, ainsi que des moyens d'amortissement selon un premier mode de réalisation montés sur le corps du dispositif d'orientation ;
- la figure 3 est une vue analogue à celle de la figure 2 sur laquelle sont représentés des moyens d'amortissement selon un deuxième mode de réalisation ;
- la figure 4 représente des moyens de verrouillage en position angulaire de la roue de l'atterrisseur selon un premier mode de réalisation ;
- la figure 5 représente des moyens de verrouillage en position angulaire de la roue de l'atterrisseur selon un deuxième mode de réalisation.

### DESCRIPTION DETAILLEE DE L'INVENTION

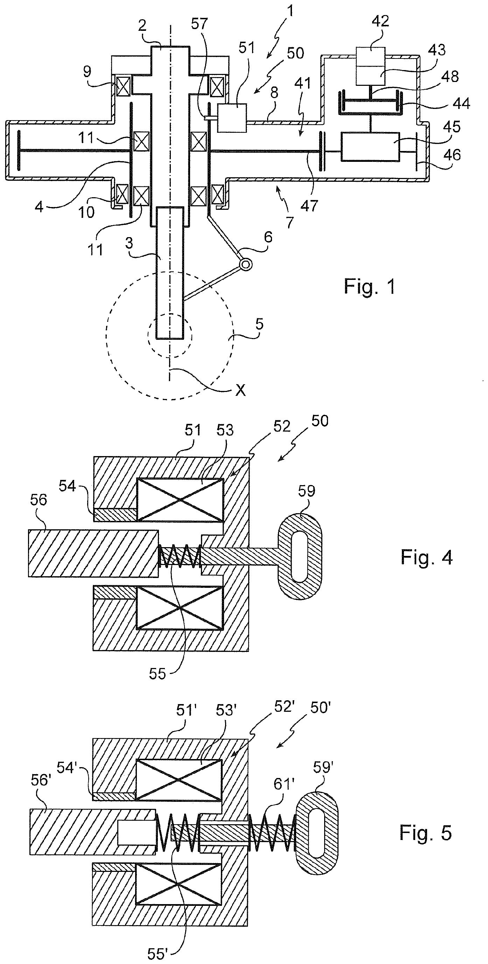

En référence à la figure 1, l'atterrisseur d'aéronef de l'invention est ici un atterrisseur auxiliaire 1 comportant un caisson 2, une tige 3 coulissant selon un axe de coulissement X dans le caisson 2, et un tube d'orientation 4 monté tournant autour de l'axe X.

Le caisson 2, dont on ne voit que la partie inférieure, est articulé en partie haute à la structure de l'aéronef. Le tube d'orientation 4 est immobilisé axialement par des moyens non représentés. Une extrémité inférieure de la tige 3 porte les roues 5 de l'atterrisseur 1. La liaison en rotation entre le tube d'orientation 4 et la tige 3, qui autorise leur déplacement relatif axial selon l'axe X, est assurée par un compas de liaison 6 articulé entre une extrémité inférieure du tube d'orientation 4 et une partie inférieure de la tige 3.

L'atterrisseur 1 est de plus équipé d'un dispositif d'orientation 7 des roues 5 autour de l'axe X.

Le dispositif d'orientation 7 comprend un corps 8 monté tournant autour de l'axe X grâce à un premier palier 9 et à un deuxième palier 10. Le premier palier 9 est positionné à l'intérieur du corps 8 du dispositif d'orientation 7 entre le corps 8 du dispositif d'orientation 7 et le caisson 2 de l'atterrisseur 1. Le deuxième palier 10 est positionné à l'intérieur du corps 8 du dispositif d'orientation 7 entre le corps 8 du dispositif d'orientation 7 et une partie inférieure du tube d'orientation 4. Deux troisièmes paliers 11 sont de plus positionnés entre le tube d'orientation 4 et le caisson 2.

L'amplitude de la rotation du corps 8 du dispositif d'orientation 7 est limitée entre un angle de rotation maximal et un angle de rotation minimal grâce à des butées, non représentées sur la figure 1.

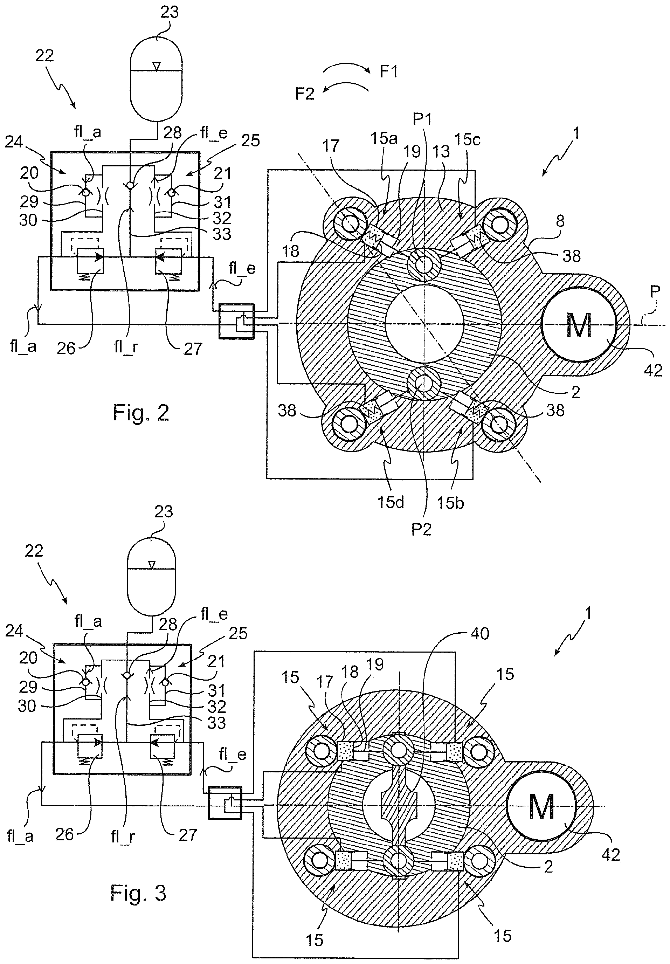

En référence à la figure 2, le corps 8 du dispositif d'orientation 7 présente une partie supérieure 13 sur laquelle sont montés des moyens d'amortissement. Ces moyens d'amortissement sont destinés à limiter la transmission de vibrations depuis les roues 5 vers le reste de l'atterrisseur 1 et vers la structure de l'aéronef lorsque l'aéronef est au sol.

Les moyens d'amortissement comprennent ici quatre vérins hydrauliques 15a, 15b, 15c, 15d reliés au corps 8 du dispositif d'orientation 7. Les vérins hydrauliques 15 sont en l'occurrence montés sur la partie supérieure 13 du corps 8 du dispositif d'orientation 7. Les vérins hydrauliques 15 sont répartis en une première paire de vérins hydrauliques comprenant les vérins hydrauliques 15a et 15b et une deuxième paire de vérins hydrauliques comprenant les vérins hydrauliques 15c et 15d. La première paire de vérins hydrauliques et la deuxième paire de vérins hydrauliques sont disposées l'une par rapport à l'autre symétriquement par rapport à un plan vertical P passant par l'axe X.

Chacun de ces vérins hydrauliques 15 comporte un corps 17 monté sur la partie supérieure 13 du corps 8 du dispositif d'orientation 7 et un piston 18 coulissant dans le corps 17 du vérin 15. Le piston 18 est muni d'une tige 19 articulée sur le caisson 2 de l'atterrisseur 1.

Les tiges 19 de deux vérins hydrauliques 15 adjacents de deux paires différentes sont articulées au niveau d'un même point d'articulation P1, P2 du caisson 2 de l'atterrisseur 1. Ainsi, les tiges 19 des vérins hydrauliques 15a, 15c sont articulées au niveau du point d'articulation P1 et les tiges 19 des vérins hydrauliques 15b, 15d sont articulées au niveau du point d'articulation P2.

Les vérins hydrauliques 15 sont agencés de sorte que, lorsque les vibrations transmises depuis les roues 5 tendent à faire tourner le corps 8 du dispositif d'orientation 7 dans un sens horaire, représenté par la flèche F1 sur la figure 2, les tiges 19 des vérins hydrauliques 15a, 15b de la première paire de vérins s'étendent simultanément d'une certaine longueur et les tiges 19 des vérins hydrauliques 15c, 15d se rétractent simultanément de la même certaine longueur. De même, lorsque les vibrations transmises depuis les roues 5 tendent à faire tourner le corps 8 du dispositif d'orientation 7 dans un sens antihoraire, représenté par la flèche F2 sur la figure 2, les tiges 19 des vérins hydrauliques 15c, 15d s'étendent simultanément d'une certaine longueur et les tiges 19 des vérins hydrauliques 15a, 15b se rétractent simultanément de la même certaine longueur.

L'utilisation de quatre vérins hydrauliques 15 positionnés comme précédemment décrit permet d'éviter d'appliquer sur le caisson 2 de l'atterrisseur 1 des efforts parasites tangentiels ou radiaux et donc de ne pas surdimensionner le premier palier 9 et le deuxième palier 10. De plus, la multiplication du nombre de vérins hydrauliques 15 permet de réduire la taille et la masse de chacun des vérins hydrauliques 15.

Les quatre vérins hydrauliques 15 sont alimentés par un circuit d'alimentation hydraulique 22. Ce circuit d'alimentation hydraulique 22 comporte un accumulateur 23, un premier limiteur de débit 24 avec un premier clapet d'anti-retour 20 incorporé, un deuxième limiteur de débit 25 avec un deuxième clapet d'anti-retour 21 incorporé, un premier clapet de surpression 26, un deuxième clapet de surpression 27, et un troisième clapet d'anti-retour 28. Ces éléments sont répartis dans une première voie d'alimentation 29, une première voie de retour 30, une deuxième voie d'alimentation 31, une deuxième voie de retour 32, et une voie de sécurité 33.

Les deux vérins hydrauliques 15a, 15b de la première paire de vérins hydrauliques sont reliés à la première voie d'alimentation 29 et à la première voie de retour 30, alors que les deux vérins hydrauliques 15c, 15d de la deuxième paire de vérins sont reliés à la deuxième voie d'alimentation 31 et à la deuxième voie de retour 32.

Lorsque le corps 8 du dispositif d'orientation 7 tourne dans le sens horaire, les tiges 19 des vérins hydrauliques 15a, 15b de la première paire de vérins s'étendent. Un fluide hydraulique admis fl_a est admis dans le corps 17 des vérins hydrauliques 15a, 15b de la première paire de vérins. Le fluide hydraulique admis fl_a chemine depuis l'accumulateur 23 par la première voie d'alimentation 29 via le premier clapet anti-retour 20 qui autorise le passage du fluide admis fl_a dans ce sens.

Dans le même temps, les tiges 19 des vérins hydrauliques 15c, 15d de la deuxième paire de vérins se rétractent, ce qui provoque une évacuation d'un fluide hydraulique évacué fl_e depuis le corps 17 des vérins hydrauliques 15c, 15d de la deuxième paire de vérins vers l'accumulateur 23. Le fluide hydraulique évacué fl_e chemine depuis les vérins hydrauliques 15c, 15d de la deuxième paire de vérins vers l'accumulateur 23 par la deuxième voie de retour 32. Le débit du fluide hydraulique évacué fl_e est limité par le deuxième limiteur de débit 25. Le deuxième clapet d'anti-retour 21 incorporé au deuxième limiteur de débit 25 empêche le fluide hydraulique évacué fl_e de remonter directement vers l'accumulateur 23 sans que son débit ne soit réduit. Le deuxième clapet de surpression 27 permet, si la pression du fluide hydraulique évacué fl_e est trop importante à cause d'une brusque et intense contrainte mécanique au niveau des vérins hydrauliques 15c, 15d de la deuxième paire de vérins hydrauliques, de limiter la pression au sein du circuit hydraulique 22 pour éviter un endommagement des vérins hydrauliques 15c, 15d de la deuxième paire de vérins hydrauliques. Un fluide résiduel fl_r retourne alors à l'accumulateur 23 via la voie de sécurité 33. Le troisième clapet d'anti-retour 28 autorise le retour du fluide résiduel fl_r mais interdit le passage de fluide depuis l'accumulateur 23 via cette voie de secours 33.

L'accumulateur 23 sert de réserve de fluide mais aussi apporte de la raideur des moyens d'amortissement.

On observe que l'amortissement recherché est réalisé par le deuxième limiteur de débit 25.

Le fonctionnement du circuit hydraulique 22 est similaire mais inversé lorsque le corps 8 du dispositif d'orientation 7 tourne dans le sens antihoraire.

On note qu'un ressort de rappel 38 est intégré dans le corps 17 de chaque vérin hydraulique 15. Ce ressort de rappel 38 permet de rappeler le piston 18 dans une position de repos. La position de repos est ici une position dans laquelle la tête du piston 18 est située au milieu du corps 17 du vérin 15. Ainsi, lorsque le piston 18 est dans la position de repos, la tige 19 du piston 18 est apte à s'étendre ou à se rétracter suivant le sens de rotation du corps 8 du dispositif d'orientation 7.

Dans un second mode de réalisation des moyens d'amortissement, en référence à la figure 3, on munit le caisson 2 l'atterrisseur 1 de l'invention d'une barre de flexion 40. La tige 19 du piston 18 de chaque vérin hydraulique 15 est cette fois articulée sur la barre de flexion 40. L'utilisation de cette barre de flexion 40 permet de retirer les ressorts de rappel 38 des corps 17 des vérins hydrauliques 15.

En référence de nouveau à la figure 1, on décrit maintenant un actionneur électromécanique 41 qui est intégré à l'intérieur du corps 8 du dispositif d'orientation 7, et dont le rôle est d'agir sur le tube d'orientation 4 pour orienter les roues 5 de l'atterrisseur 1. L'actionneur électromécanique 41 comprend un moteur électrique 42 (visible aussi sur les figures 2 et 3), un dispositif d'engrenage 43, un dispositif de transmission harmonique 44, des moyens d'embrayage 45, un pignon 46, et une roue dentée 47 solidaire en rotation du tube d'orientation 4.

Le dispositif d'engrenage 43 est positionné entre un arbre de sortie 48 du moteur électrique 42 et le dispositif de transmission harmonique 44. Le dispositif d'engrenage 43 comprend des étages de réduction qui coopèrent avec l'arbre de sortie 48 du moteur électrique 42. Le dispositif d'engrenage 43 permet de diminuer le couple de sortie requis pour le moteur électrique 42 et donc de réduire la taille du moteur électrique 42 et la masse de l'actionneur électromécanique 41.

Le dispositif de transmission harmonique 44 est relié mécaniquement à la sortie du dispositif d'engrenage 43. Il est destiné à transmettre un couple potentiellement élevé au pignon 46 6 avec un rapport de transmission important.

Le pignon 46 coopère avec la roue dentée 47, de sorte qu'une rotation du pignon 46 entraîne une rotation de la roue dentée 47 et donc du tube d'orientation 4. Le moteur électrique 42 entraîne ainsi en rotation le tube d'orientation 4 et donc la tige 3 pour orienter les roues 5 via le compas de liaison 6.

Les moyens d'embrayage 45 sont positionnés entre le dispositif de transmission harmonique 44 et le pignon 46. Les moyens d'embrayage 45 sont utilisés pour sélectivement solidariser l'arbre de sortie 48 du moteur électrique 42 et le tube d'orientation 4 (phase d'embrayage) ou désolidariser l'arbre de sortie 48 du moteur électrique 42 et le tube d'orientation 4 (phase de débrayage).

Le dispositif d'orientation 8 comporte enfin des moyens de verrouillage 50 en position angulaire des roues 5 de l'atterrisseur 1, lesdits moyens de verrouillage étant visibles d'une part sur la figure 1 et d'autre part sur les figures 4 et 5.

Les moyens de verrouillage 50 sont destinés à sélectivement empêcher toute rotation du tube d'orientation 4 dans le but de maintenir les roues 5 de l'atterrisseur 1 en position angulaire lorsque l'atterrisseur 1 est rentré dans une soute de l'aéronef ou à l'atterrissage.

En référence à la figure 4, les moyens de verrouillage 50 selon un premier mode de réalisation comprennent un corps 51 dans lequel est intégré un verrou bistable 52, et une manette 59 coopérant avec le verrou bistable 52. Le verrou bistable 52 comporte un électroaimant 53, un aimant 54, un ressort de rappel 55, et un noyau magnétique 56 prolongeant une tige de verrouillage 57 (visible sur la figure 1). La manette 59 est solidaire en translation du noyau magnétique 56.

Le noyau magnétique 56 est mobile entre une position de verrouillage (représentée sur la figure 4) et une position de déverrouillage.

Dans la position de verrouillage, le noyau magnétique 56 s'étend à l'extérieur du corps 51 des moyens de verrouillage 50 et positionne la tige de verrouillage 57 à l'intérieur d'une ouverture du tube de rotation 4. La tige de verrouillage 57 empêche le tube de rotation 4 de tourner.

Dans la position de déverrouillage, le noyau magnétique 56 s'étend à l'intérieur du corps 51 des moyens de verrouillage 50 et éloigne la tige de verrouillage 57 du tube de rotation 4. Le tube de rotation 4 est libre de tourner et d'orienter la tige 3 et donc les roues 5 de l'atterrisseur 1.

Le déplacement du noyau magnétique 56 est commandé par l'alimentation de l'électroaimant par un courant d'alimentation permettant, selon son sens, de déplacer le noyau magnétique 56 vers la position de verrouillage ou la position de déverrouillage.

Lorsque le noyau magnétique 56 est en position de verrouillage, il est maintenu dans cette position par l'effet du ressort de rappel 55 sur le noyau magnétique 56. Il n'est donc pas nécessaire de maintenir l'alimentation de l'électroaimant 53.

De même, lorsque le noyau magnétique 56 est en position de déverrouillage, il est maintenu dans cette position par de l'aimant 54 sur le noyau magnétique 56. Il n'est donc à nouveau pas nécessaire de maintenir l'alimentation de l'électroaimant 53.

Les moyens de verrouillage 50 peuvent aussi être déverrouillés au sol sans alimenter l'électroaimant 53 par une simple traction sur la manette 59 qui entraîne le noyau magnétique 56 vers la position de déverrouillage dans laquelle il est maintenu grâce au ressort de rappel 55.

En référence à la figure 5, les moyens de verrouillage 50 selon un deuxième mode de réalisation comprennent à nouveau un corps 51' dans lequel est intégré un verrou bistable 52', et une manette 59' coopérant avec le verrou bistable 52'. Le verrou bistable S2' comporte un électroaimant 53', un aimant 54', un premier ressort de rappel 55' analogue au ressort de rappel 55, un deuxième ressort de rappel 61', et un noyau magnétique 56' prolongeant une tige de verrouillage 57'. La manette 59' n'est cette fois plus solidaire en translation du noyau magnétique 56' mais joue avec celui-ci le rôle d'un court-circuit magnétique.

Lorsque le noyau magnétique 56' est en position de verrouillage, il est maintenu dans cette position par l'effet de l'aimant 54' sur le noyau magnétique 56'. En poussant la manette 59' vers le noyau magnétique 56', on crée un cours circuit magnétique lorsque ceux-ci sont en contact. L'aimant 54' n'agit alors plus sur le noyau magnétique 56' qui est rappelé dans la position de déverrouillage par le premier ressort de rappel 55'. La manette 59' est rappelée dans sa position initiale par le deuxième ressort de rappel 61'.

Les moyens de verrouillage 50' peuvent donc eux-aussi être déverrouillés au sol sans alimenter l'électroaimant 52' par une simple poussée sur la manette 52'.

Les moyens de verrouillage 50, 50' permettent de supprimer le système de came de centrage utilisé traditionnellement pour maintenir les roues en position lorsque l'atterrisseur est rentré dans la soute.

On note que, dans l'atterrisseur de l'invention, comme les moyens d'amortissement sont indépendants de la chaîne cinématique de l'actionneur électromécanique, il est parfaitement possible de désolidariser l'arbre de sortie du moteur électrique et le tube d'orientation tout en bénéficiant de l'amortissement.

Pour autoriser le débrayage, on vérifie classiquement que l'aéronef est au sol en train d'être tracté, ou que la vitesse de l'aéronef est relativement élevée et que les moyens de verrouillage verrouillent le tube d'orientation de sorte que l'angle d'orientation des roues est égal à 0°.

On définit ainsi un mode normal d'atterrissage et un mode alternatif d'atterrissage.

Dans le mode normal d'atterrissage, le dispositif d'orientation est actif (le verrou des moyens de verrouillage n'est pas enclenché) dès l'atterrissage quelle que soit la vitesse de l'avion.

Dans le mode alternatif d'atterrissage, le dispositif d'orientation est inactif. A l'atterrissage et à vitesse élevée, le verrou est enclenché et assure que l'angle d'orientation des roues est égal à 0°. Les vérins hydrauliques jouent leur rôle d'amortisseurs. Aux vitesses intermédiaires, le verrou n'est pas enclenché mais les moyens d'embrayage sont dans la phase d'embrayage et maintiennent l'inertie et la raideur apportées par l'actionneur électromécanique. Aux vitesses faibles, les moyens d'embrayages sont amenés dans la phase de débrayage pour faciliter la manoeuvre de l'aéronef lors du tractage de l'aéronef. L'aéronef ne peut plus s'orienter de manière autonome.

L'invention n'est pas limitée aux modes de mise en oeuvre particuliers qui viennent d'être décrits, mais, bien au contraire, couvre toute variante entrant dans le cadre de l'invention telle que définie par les revendications.

Bien que l'on ait indiqué que les corps des vérins sont montés sur la partie supérieure du corps du dispositif d'orientation, les moyens d'amortissement peuvent être positionnés différemment à condition qu'ils s'étendent entre le corps du dispositif d'orientation et le caisson.

Bien que l'on ait décrit un premier palier positionné entre le corps du dispositif d'orientation et le caisson de l'atterrisseur, un deuxième palier positionné entre le corps du dispositif d'orientation et une partie inférieure du tube d'orientation, et deux troisièmes paliers positionnés entre le tube d'orientation et le caisson, il est possible de prévoir une disposition différente des paliers. Il est possible d'envisager de positionner deux paliers entre le corps du dispositif d'orientation et le tube d'orientation, et deux paliers entre le tube et le caisson. Il est aussi possible d'envisager de positionner deux paliers entre le corps et le caisson, et deux paliers entre le tube et le caisson.

## Revendications

1. Atterrisseur d'aéronef comportant un caisson (2) articulé à la structure de l'aéronef, une tige (3) coulissant selon un axe de coulissement X dans le caisson (2) et dont une extrémité libre porte au moins une roue (5), un tube d'orientation (4) monté tournant autour de l'axe (X), et un compas de liaison (6) en rotation du tube d'orientation (4) et de la tige (3), l'atterrisseur (1) étant de plus équipé d'un dispositif d'orientation (7) de la roue (5) autour de l'axe X, le dispositif d'orientation (7) comprenant un corps (8) dans lequel est intégré un actionneur électromécanique (41) équipé d'un moteur électrique (42) destiné à entraîner en rotation le tube d'orientation (4) et donc la tige (3) pour orienter la roue (5), l'atterrisseur étant muni en outre de moyens d'amortissement destinés à limiter la transmission de vibrations depuis la roue (5) vers le reste de l'atterrisseur lorsque l'aéronef est au sol,
**caractérisé en ce que** le corps (8) du dispositif d'orientation (7) est monté tournant selon l'axe (X) avec une amplitude de rotation limitée, et **en ce que** les moyens d'amortissement s'étendent entre le corps (8) du dispositif d'orientation (7) et le caisson (2) pour amortir les vibrations entre le corps (8) du dispositif d'orientation (7) et le caisson (2).

2. Atterrisseur d'aéronef selon la revendication 1, dans lequel les moyens d'amortissement comportent au moins un vérin hydraulique (15).

3. Atterrisseur d'aéronef selon la revendication 2, dans lequel le vérin hydraulique (15) comporte un corps (17) relié au corps (8) du dispositif d'orientation (7) et un piston (18) coulissant dans le corps (17) du vérin hydraulique (15) muni d'une tige (19) articulée sur le caisson (2) de l'atterrisseur (1).

4. Atterrisseur d'aéronef selon la revendication 3, dans lequel un ressort de rappel (38) est intégré dans le corps (17) du vérin hydraulique (15).

5. Atterrisseur d'aéronef selon la revendication 3, dans lequel le caisson (2) est muni d'une barre de flexion (40), et dans lequel la tige (19) du piston (18) est articulée sur la barre de flexion (40).

6. Atterrisseur d'aéronef selon l'une des revendications 2 à 5, dans lequel les moyens d'amortissement comportent deux paires de vérins hydrauliques (15) disposées l'une par rapport à l'autre symétriquement par rapport à un plan vertical (P) passant par l'axe X.

7. Atterrisseur d'aéronef selon l'une des revendications précédentes, dans lequel l'actionneur électromécanique (41) du dispositif d'orientation (7) est muni de moyens d'embrayage (45) adaptés à sélectivement accoupler ou désaccoupler au tube d'orientation (4) un arbre de sortie (48) du moteur électrique (42).

8. Atterrisseur d'aéronef selon l'une des revendications précédentes, dans lequel le dispositif d'orientation (7) comporte des moyens de verrouillage (50, 50') en position angulaire de la roue (5) de l'atterrisseur (1).

9. Atterrisseur d'aéronef selon la revendication 8, dans lequel les moyens de verrouillage (50, 50') comprennent un verrou (52, 52') adapté à bloquer en rotation le tube d'orientation (4).

10. Atterrisseur d'aéronef selon la revendication 9, dans lequel le verrou (52, 52') est un verrou bistable.

11. Atterrisseur d'aéronef selon la revendication 9, dans lequel le verrou comporte un électroaimant (53, 53').

12. Atterrisseur d'aéronef selon la revendication 9, dans lequel les moyens de verrouillage (50, 50') comprennent une manette (59, 59') permettant de déverrouiller manuellement la position angulaire de la roue (5) de l'atterrisseur (1).

## Patentansprüche

1. Luftfahrzeugfahrwerk, umfassend einen Kasten (2), der an der Struktur des Luftfahrzeugs angelenkt ist, eine Stange (3), die sich entlang einer Verschiebungsachse X in dem Kasten (2) verschiebt und von der ein freies Ende mindestens ein Rad (5) trägt, ein Ausrichtungsrohr (4), das drehbar um die Achse (X) gelagert ist, sowie eine Drehmomentstützgabel (6) zur Drehverbindung des Ausrichtungsrohres (4) und der Stange (3), wobei das Fahrwerk (1) ferner mit einer Ausrichtungsvorrichtung (7) zum Ausrichten der Räder (5) um die Achse X ausgestattet ist, wobei die Ausrichtungsvorrichtung (7) ein Gehäuse (8) umfasst, in dem ein elektromechanischer Aktor (41) integriert ist, der mit einem Elektromotor (42) ausgestattet ist, der dazu bestimmt ist, das Ausrichtungsrohr (4) und demzufolge die Stange (3) in Drehung anzutreiben, um das Rad (5) auszurichten, wobei das Fahrwerk ferner mit Dämpfungsmitteln versehen ist, die dazu bestimmt sind, die Übertagung von Vibrationen von dem Rad (5) auf den Rest des Fahrwerks zu begrenzen, wenn das Luftfahrzeug am Boden ist,
**dadurch gekennzeichnet, dass** das Gehäuse (8) der Ausrichtungsvorrichtung (7) mit einer begrenzten Rotationsamplitude drehbar um die Achse (X) gelagert ist, und dass sich die Dämpfungsmittel zwischen dem Gehäuse (8) der Ausrichtungsvorrichtung (7) und dem Kasten (2) erstrecken, um die Vibrationen zwischen dem Gehäuse (8) der Ausrichtungsvorrichtung (7) und dem Kasten (2) zu beschränken.

2. Luftfahrzeugfahrwerk nach Anspruch 1, bei dem die Dämpfungsmittel mindestens einen Hydraulikzylinder (15) umfassen.

3. Luftfahrzeugfahrwerk nach Anspruch 2, bei dem der Hydraulikzylinder (15) ein Gehäuse (17) umfasst, das mit dem Gehäuse (8) der Ausrichtungsvorrichtung (7) verbunden ist, sowie einen Kolben (18), der in dem Gehäuse (17) des Hydraulikzylinders (15) gleitet und mit einer Stange (19) versehen ist, die an dem Kasten (2) des Fahrwerks (1) angelenkt ist.

4. Luftfahrzeugfahrwerk nach Anspruch 3, bei dem eine Rückstellfeder (38) in das Gehäuse (17) des Hydraulikzylinders (15) integriert ist.

5. Luftfahrzeugfahrwerk nach Anspruch 3, bei dem der Kasten (2) mit einem Biegestab (40) versehen ist, und bei dem die Stange (19) des Kolbens (18) an dem Biegestab (40) angelenkt ist.

6. Luftfahrzeugfahrwerk nach einem der Ansprüche 2 bis 5, bei dem die Dämpfungsmittel zwei Paare von Hydraulikzylindern (15) umfassen, die in Bezug auf eine vertikale Ebene (P), die durch die Achse X geht, symmetrisch zueinander angeordnet sind.

7. Luftfahrzeugfahrwerk nach einem der vorhergehenden Ansprüche, bei dem der elektromechanische Aktor (41) der Ausrichtungsvorrichtung (7) mit Kupplungsmitteln (45) versehen ist, die dazu geeignet sind, eine Abtriebswelle (48) des Elektromotors (42) selektiv an das Ausrichtungsrohr (4) zu kuppeln oder von demselben zu entkuppeln.

8. Luftfahrzeugfahrwerk nach einem der vorhergehenden Ansprüche, bei dem die Ausrichtungsvorrichtung (7) Verriegelungsmittel (50, 50') zur Verriegelung des Rades (5) des Fahrwerks (1) in einer Winkelposition umfasst.

9. Luftfahrzeugfahrwerk nach Anspruch 8, bei dem die Verriegelungsmittel (50, 50') einen Riegel (52, 52') umfassen, der dazu geeignet ist, das Ausrichtungsrohr (4) in Rotation zu blockieren.

10. Luftfahrzeugfahrwerk nach Anspruch 9, bei dem der Riegel (52, 52') ein bistabiler Riegel ist.

11. Luftfahrzeugfahrwerk nach Anspruch 9, bei dem der Riegel einen Elektromagneten (53, 53') umfasst.

12. Luftfahrzeugfahrwerk nach Anspruch 9, bei dem die Verriegelungsmittel (50, 50') einen Griff (59, 59') umfassen, der ein manuelles Entriegeln der Winkelposition des Rades (5) des Fahrwerks (1) ermöglicht.

## Claims

1. Aircraft landing gear comprising a strut assembly (2) articulated to the structure of the aircraft, a strut (3) sliding along an axis of sliding X in the strut assembly (2) and a free end of which carries at least one wheel (5), a steering tube (4) mounted with the ability to rotate about the axis (X), and a torque link (6) connecting the steering tube (4) and the strut (3) in terms of rotation, the landing gear (1) additionally being equipped with a steering device (7) for orienting the wheel (5) about the axis X, the steering device (7) comprising a body (8) in which is incorporated an electromechanical actuator (41) equipped with an electric motor (42) intended to drive the rotation of the steering tube (4) and therefore of the strut (3) in order to steer the wheel (5), the landing gear being further equipped with damping means intended to limit the transmission of vibration from the wheel (5) to the rest of the landing gear when the aircraft is on the ground, **characterized in that** the body (8) of the steering device (7) is mounted with the ability to rotate about the axis (X) with a limited amplitude of rotation, and **in that** the damping means extend between the body (8) of the steering device (7) and the strut assembly (2) to damp the vibration between the body (8) of the steering device (7) and the strut assembly (2).

2. Aircraft landing gear according to Claim 1, in which the damping means comprise at least one hydraulic jack (15).

3. Aircraft landing gear according to Claim 2, in which the hydraulic jack (15) comprises a body (17) connected to the body (8) of the steering device (7) and a piston (18) sliding in the body (17) of the hydraulic jack (15) provided with a rod (19) articulated to the strut assembly (2) of the landing gear (1).

4. Aircraft landing gear according to Claim 3, in which a return spring (38) is incorporated into the body (17) of the hydraulic jack (15).

5. Aircraft landing gear according to Claim 3, in which the strut assembly (2) is equipped with a bending bar (40), and in which the rod (19) of the piston (18) is articulated to the bending bar (40).

6. Aircraft landing gear according to one of Claims 2 to 5, in which the damping means comprise two pairs of hydraulic jacks (15) positioned relative to one another symmetrically about a vertical plane (P) passing through the axis X.

7. Aircraft landing gear according to one of the preceding claims, in which the electromechanical actuator (41) of the steering device (7) is equipped with clutch means (45) designed selectively to couple an output shaft (48) of the electric motor (42) to the steering tube (4) or uncouple same therefrom.

8. Aircraft landing gear according to one of the preceding claims, in which the steering device (7) comprises locking means (50, 50') for locking the wheel (5) of the landing gear (1) in an angular position.

9. Aircraft landing gear according to Claim 8, in which the locking means (50, 50') comprise a lock (52, 52') designed to prevent the steering tube (4) from turning.

10. Aircraft landing gear according to Claim 9, in which the lock (52, 52') is a bistable lock.

11. Aircraft landing gear according to Claim 9, in which the lock comprises an electromagnet (53, 53').

12. Aircraft landing gear according to Claim 9, in which the locking means (50, 50') comprise a handle (59, 59') allowing the angular position of the wheel (5) of the landing gear (1) to be unlocked manually.
